# EUROPÄISCHE PATENTSCHRIFT

(11) **EP 1 651 480 B1**
(45) Veröffentlichungstag und Bekanntmachung des Hinweises auf die Patenterteilung: **12.02.2014**
(21) Anmeldenummer: 04741357.0
(22) Anmeldetag: 03.08.2004
(51) Int. Cl.: B60S 1/04, F16B 31/02

(54) **BEFESTIGUNGSANORDNUNG**
FASTENING SYSTEM
DISPOSITIF DE FIXATION

(30) Priorität: 07.08.2003 DE 10336208
(43) Veröffentlichungstag der Anmeldung: 03.05.2006
(73) Patentinhaber: VALEO SYSTEMES D'ESSUYAGE, 78321 Le Mesnil Saint Denis (FR)
(72) Erfinder: FONTA, Sébastien, F-25610 Arc et Senans (FR)
(74) Vertreter: Behrmann, Niels
(86) Internationale Anmeldenummer: PCT/EP2004/008674
(87) Internationale Veröffentlichungsnummer: WO 2005/016710

(56) Entgegenhaltungen:
- WO-A-03/047926
- FR-A- 2 846 288

## Beschreibung

Die Erfindung betrifft eine Befestigungsanordnung für eine Befestigung eines Funktionselementes an einer Einrichtung nach dem Oberbegriff des Anspruchs 1.

Eine derartige Befestigungsanordnung ist aus der WO 2003/047926 bekannt. Bei der bekannten Befestigungsanordnung wirkt ein rohrförmiger Stift mit einer als Arretierelement ausgebildeten Sicherungsscheibe zusammen, wobei der rohrförmige Stift mittels einer Mutter an einem Strukturbauteil der Karosserie eines Kraftfahrzeugs befestigt ist. Bei einer Überlastung der Befestigungsanordnung kommt es zu einem Bruch bzw. zu einer Auflösung der Verbindung zwischen der Befestigungsscheibe und dem rohrförmigen Stift.

Ausgehend von dem dargestellten Stand der Technik besteht die Aufgabe der Erfindung darin, einen verbesserten Kraftfluss zwischen den einzelnen Bauelementen der Befestigungsanordnung und somit eine besonders sichere Auslösung der Befestigungsanordnung im Falle einer Überlastung sicherzustellen. Diese Aufgabe wird bei einer Befestigungsanordnung mit den Merkmalen des Anspruchs 1 gelöst.

Vorteilhafte Weiterbildungen der erfindungsgemäßen Befestigungsanordnung sind in den Unteransprüchen angegeben.

Die Befestigungsanordnung kann so ausgebildet sein, dass die auf das Funktionselement wirkende Kraft über mindestens ein Befestigungselement auf das Sicherungselement, d.h. indirekt bzw. mittelbar, übertragbar ist. Mit einer derartigen Ausgestaltung wird erreicht, dass das Sicherungselement nicht direkt durch das Funktionselement beaufschlagbar ist. Somit sind, auf das Sicherungselement wirkende Kräfte, die aus einer Krafteinwirkung auf das Funktionselement resultieren, gezielt, geregelt und auf einen Punkt genau übertragbar.

Es ist vorgesehen, dass das Sicherungselement der erfindungsgemäßen Befestigungsanordnung mindestens eine Sollbruchstelle aufweist. Mit dieser Ausgestaltung ist das Brechen des Sicherungselements zuverlässig herbeiführbar. Durch die Ausgestaltung des Sicherungselements mit mehreren Sollbruchstellen ist das Brechen des Sicherungselements auch dann gesichert, falls lediglich eine der Sollbruchstellen auf die hinreichend große wirkende Kraft bricht. Mehrere Sollbruchstellen können dabei unter Berücksichtigung einer strukturellen Ausgestaltung des Sicherungselements an günstigen Positionen angeordnet sein. Weist das Sicherungselement beispielsweise eine besondere Symmetrie auf, so können die Sollbruchstellen an dem Sicherungselement symmetrisch gleichmäßig verteilt angeordnet sein.

In einer bevorzugten Ausgestaltung der Erfindung ist die Befestigungsanordnung über ein als Schraube ausgebildetes Befestigungselement an einer als Fahrzeugteil ausgebildeten Einrichtung verankert. Infolgedessen kann das Funktionselement über die Befestigungsanordnung an einer beliebigen Stelle eines Fahrzeugs, sowohl außen als auch innen, befestigt sein. Das dabei vorgesehene Fahrzeugteil kann so ausgewählt werden, dass das Funktionselement seine eigentliche Funktion an einer hierfür vorgesehenen Position des Fahrzeugs in optimaler Weise durchführen kann. Wirkt auf das Funktionselement eine Kraft oberhalb eines vorgegeben Werts, so erfolgt ein Lösen der Befestigung aufgrund der erfindungsgemäßen Ausgestaltung der Befestigungsanordnung unabhängig davon, wo das Funktionselement an dem Fahrzeug angeordnet ist und/oder aus welcher Richtung die Kraft auf das Funktionselement wirkt. Genauere Umstände, unter denen die Kraft auf das Funktionselement einwirkt, beispielsweise bei einem Unfall, sind für die Funktion der Befestigungsanordnung nicht relevant.

Bei einer möglichen Ausgestaltung der Erfindung ist die Befestigungsanordnung über eine Halteeinrichtung mit dem Funktionselement verbunden. Somit ist eine räumliche Trennung des Funktionselements und der Befestigungsanordnung möglich. Mittels der Halteeinrichtung ist die auf das Funktionselement wirkende Kraft gezielt übertragbar. Dabei kann die Halteeinrichtung so ausgestaltet sein, dass die Befestigungsanordnung durch Kräfte, die nicht auf das Funktionselement wirken, nicht beaufschlagt wird, so dass einer möglichen Fehlfunktion der Befestigungsanordnung vorgebeugt werden kann. Die Halteeinrichtung kann eine beliebige, die Übertragung von Kräften begünstigende Form oder Materialbeschaffenheit aufweisen. Die eine Befestigungsanordnung kann mit dem einen Funktionselement über eine entsprechend ausgestaltete Halteeinrichtungen, einer jeweiligen räumlichen Gegebenheit entsprechend verbunden sein. Aufgrund einer derartigen Modularität ist eine zuverlässige Funktionsweise der Befestigungsanordnung von einer konkreten Ausgestaltung einer Einrichtung, an der das Funktionselement über die Befestigungsanordnung befestigt ist, unabhängig.

In weiterer Ausgestaltung kann die Befestigungsanordnung ein koaxial zu der Buchse angeordnetes, über das Sicherungselement fixiertes und als elastische Tülle ausgebildetes Befestigungselement zur Aufnahme der Halteeinrichtung aufweisen. Mit der Schraube wird demnach eine Verankerung der Befestigungsanordnung an dem Fahrzeugteil ermöglicht. An der Schraube über die Buchse sowie über die elastische Tülle ist eine Verbindung bzw. Befestigung des Funktionselements über die Halteeinrichtung an dem Fahrzeugteil und somit an einem Fahrzeug möglich. Die Befestigung bzw. Fixierung, Festlegung oder Sicherung der Halteeinrichtung und somit des Funktionselements wird durch das Sicherungselement bereitgestellt. Der Zustand des Sicherungselements, ob es nun gebrochen oder nicht gebrochen ist, entscheidet darüber, ob das Funktionselement an der Befestigungsanordnung befestigt ist oder von der Befestigungsanordnung und somit von dem Fahrzeugteil gelöst ist. Jedes der Befestigungselemente, aus denen die Befestigungsanordnung, erfüllt hierbei üblicherweise eine Funktion.

Bei einer Ausgestaltung der Erfindung kann vorgesehen sein, dass bei der Befestigungsanordnung mindestens zwei Befestigungselemente koaxial zu einer Achse angeordnet sind, wobei die Richtung der auf das Funktionselement wirkenden Kraft auf das Sicherungselement senkrecht zu der Achse übertragbar ist. Bei der Achse kann es sich um eine Hauptachse der Schraube handeln. Sind mehrere oder alle Befestigungselemente koaxial zu der Achse angeordnet, ist die Befestigungsanordnung unter einem Winkel von vorzugsweise 90° zu dem Fahrzeugteil anzuordnen. Konkrete Ausgestaltungen eines oder mehrerer der Befestigungselemente bzw. mögliche Anordnungen von Befestigungselementen untereinander können dabei so vorgenommen sein, dass die gesamte Befestigungsanordnung bezüglich ihrer Funktion an konkrete Befestigungen des Funktionselements an dem Fahrzeugteil anpassbar ist. Die Art und Weise, in der die auf das Funktionselement wirkende Kraft letztendlich auf das Sicherungselement übertragen wird und bedarfsweise ein Brechen des Sicherungselements bewirkt, kann durch geringfügige Änderungen der Ausgestaltung und/oder Anordnung nur eines Befestigungselements beeinflusst werden.

Erfindungsgemäß kann vorgesehen sein, dass die auf das Funktionselement wirkende Kraft auf das Sicherungselement in radialer Richtung übertragbar ist. Somit kann beispielsweise vermieden werden, dass eine axial zu dem Sicherungselement wirkende Kraft ein Brechen des Sicherungselements hervorruft und es wird erreicht werden, dass nur die Kräfte, die ausgehend von dem von dem Funktionselement eingeleitet werden, auf das Sicherungselement übertragbar sind.

Bei entsprechender Ausgestaltung und/oder Anordnung mindestens eines der Befestigungselemente, wobei das mindestens eine Befestigungselement an dem Sicherungselement anliegt, kann auch realisiert werden, dass alternativ oder ergänzend axial zu dem Sicherungselement wirkende Kräfte das Brechen des Sicherungselements bewirken, sofern derartige Kräfte ursprünglich auf das Funktionselement wirken und einen bestimmten vorgegebenen Wert überschreiten.

Bei einer bevorzugten Ausbildung der Erfindung kann vorgesehen sein, dass die Befestigungsanordnung an einem als Karosserie ausgebildeten Fahrzeugteil verankert ist. Hierbei kann die Befestigungsanordnung an einer Innenseite der Karosserie verankert sein, so dass sie von außen nicht sichtbar ist. Des weiteren kann die Befestigung eines außerhalb des Fahrzeugs mittelbar oder unmittelbar an der Karosserie vorgesehenen Funktionselements begünstigt werden.

Vorzugsweise kann die erfindungsgemäße Befestigungsanordnung zur Befestigung eines als Scheibenwischsystem ausgebildeten Funktionselements an einer Karosserie eines Fahrzeugs ausgebildet sein. Mit der Erfindung wird sichergestellt, dass bei einem Zusammenstoß zwischen dem Fahrzeug und einer Person die Befestigung des Scheibenwischsystems über die Befestigungsanordnung relativ zu der Karosserie gelöst wird, so dass das Scheibenwischsystem bei dem Zusammenstoß nachgibt und eine Position des Scheibenwischsystems relativ zu der Karosserie leicht veränderbar ist. Der hierfür erforderliche, auf das Scheibenwischersystem wirkende Wert für die Kraft wird bei dem Zusammenstoß erreicht bzw. überschritten. Ein konkreter hierfür festzulegender Wert kann mit einer konkreten Ausgestaltung der Befestigungsanordnung bestimmt bzw. vorgegeben werden. Durch die Ausbildung der Befestigungsanordnung kann andererseits vermieden werden, dass sich das Scheibenwischsystem während eines Normalbetriebs, insbesondere während eines Normalbetriebs unter hoher Belastung, löst.

Zudem können nur solche Kräfte das Lösen der Befestigung des Scheibenwischsystems verursachen, die direkt an dem Scheibenwischsystem richtungsunabhängig angreifen. Somit kann nach einem Unfall, durch den das Scheibenwischsystem nicht direkt betroffen ist, eine festgelegte Positionierung des Scheibenwischsystems relativ zu der Karosserie beibehalten werden, so dass die Funktionstüchtigkeit des Scheibenwischsystems aufrecht erhalten bleibt.

Ein erfindungsgemäßes Scheibenwischsystem mit einer Drehachse zur Bereitstellung einer Bewegung eines Wischblatts relativ zu einer Karosserie eines Fahrzeugs ist mit einer erfindungsgemäßen Befestigungsanordnung an der Karosserie zu befestigen. Dabei kann das Scheibenwischsystem beispielsweise über die Drehachse oder ein anderes geeignetes tragendes Teil mit der Befestigungsanordnung verbunden sein. Bei Normalbetrieb ist das Scheibenwischsystem an der Karosserie des Fahrzeugs so befestigt, dass damit eine optimale Reinigung einer Scheibe des Fahrzeugs durchgeführt werden kann. Bei einem Zusammenstoß mit einer Person, bei dem die Person das Scheibenwischsystem berührt, wobei das Scheibenwischsystem mit einer Kraft oberhalb eines vorgegebenen Werts beaufschlagt wird, ist vorgesehen, dass sich das Scheibenwischsystem löst, also gegenüber der Person nachgibt, so dass ein durch das Scheibenwischsystem eventuell verursachbare Verletzungsrisiko der Person minimiert wird.

Das Sicherungselement kann ringförmig ausgebildet sein und koaxial zu einer Achse der Befestigungsanordnung als ein Befestigungselement einer Anzahl zusammenwirkender Befestigungselemente der Befestigungsanordnung angeordnet sein. Bei der ringförmigen Ausgestaltung des Sicherungselements können mehrere Sollbruchstellen so angeordnet sein, dass Sektoren, die von zwei Sollbruchstellen begrenzt sind, dieselbe Winkelgröße aufweisen. Weist das Sicherungselement beispielsweise eine Anzahl von n Sollbruchstellen auf, beträgt die Größe eines Sektors zwischen zwei Sollbruchstellen 360°/n. Somit wird eine symmetrisch homogene Verteilung der Sollbruchstellen des Sicherungselements erreicht.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im folgenden unter Bezugnahme auf die Zeichnung ausführlich beschrieben.

Die Figuren werden zusammenhängend und übergreifend beschrieben, dabei bedeuten gleiche Bezugszeichen gleiche Bauteile.
- Figur 1: zeigt eine bevorzugte Ausgestaltung einer erfindungsgemäßen Befestigungsanordnung in einem ersten Zustand.
- Figur 2: zeigt eine bevorzugte Ausgestaltung eines Sicherungselements in einem ersten Zustand.
- Figur 3: zeigt die erfindungsgemäße Befestigungsanordnung in bevorzugter Ausgestaltung in einem zweiten Zustand.
- Figur 4: zeigt das Sicherungselement bevorzugter Ausgestaltung in einem zweiten Zustand.

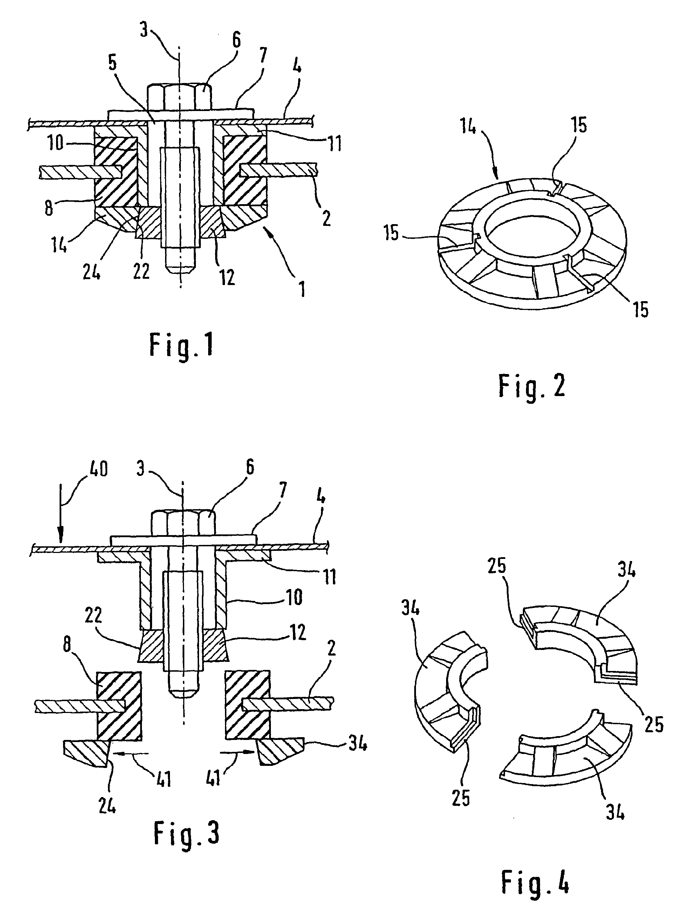

In dem in Figur 1 gezeigten Zustand dient eine Befestigungsanordnung 1 der Befestigung eines nicht weiter dargestellten Funktionselements, wie beispielsweise eines Scheibenwischsystems an einem Fahrzeugteil, wie bspw. einer Karosserie 4.

Die Befestigungsanordnung 1 weist eine Schraube 6, eine Tülle 8, eine Buchse 10, eine konische Mutter 12 sowie ein Sicherungselement 14 auf. Diese Befestigungselemente der Befestigungsanordnung 1 sind koaxial zu einer Achse 3 der Befestigungsanordnung 1 angeordnet. Die Befestigungsanordnung 1 ist über die Schraube 6 an der Karosserie 4 eines Fahrzeugs verankert. Hierbei greift die Schraube 6 durch eine Öffnung 5 der Karosserie 4. Ein an die Öffnung 5 angrenzender Rand der Karosserie 4 ist hierzu zwischen einem flachen Kopfteil 7 der Schraube 6 und einem Oberteil 11 der Buchse 10 eingeklemmt. Die Buchse 10 ist zwischen der an der Schraube 6 befestigten Mutter 12 und/oder dem zu der Mutter 12 koaxial angeordneten Sicherungselement 14 und der Karosserie 4 angeordnet und/oder eingespannt.

Eine Außenfläche 22 der Mutter 12 ist hierbei einer Innenfläche 24 des Sicherungselements 14 angepasst angeordnet. In dem konkreten Fall ist sowohl die Mutter 12 als auch das Sicherungselement 14 konisch ausgebildet. Die Tülle 8, die vorzugsweise aus einem elastischen Material ausgebildet ist, ist koaxial zu der Achse 3 der Befestigungsanordnung 3 bzw. koaxial zu der Schraube 6 bzw. koaxial zu der Buchse 10 angeordnet. Des weiteren ist die Tülle 8 zwischen dem Oberteil 11 der Buchse 10 und dem Sicherungselement 14 angeordnet, eingeklemmt und/oder eingespannt.

Die Halteeinrichtung 2, die als ein Verbindungselement bzw. eine Trageeinrichtung für ein in der Figur 1 nicht dargestelltes Funktionselement, ausgebildet ist, ist in der Buchse 8 aufgenommen. Mit der Befestigungsanordnung 1 wird demnach eine Befestigung des Scheibenwischsystems relativ zu der Karosserie 4 bereitgestellt, wobei ein Wischblatt oberhalb der Karosserie und ein Scheibenwischermotor oder eine Drehachse für das Wischblatt unterhalb der Karosserie angeordnet sein kann. Die Befestigungsanordnung 1 bzw. die Halteeinrichtung 2 kann unterhalb der Karosserie 4 angeordnet sein.

Eine elastische Verformung bzw. Bewegungsfreiheit der Tülle 8 ist durch den verbleibenden Abstand zwischen dem Oberteil 11 der Buchse 10 und der vorzugsweise konische ausgebildeten Mutter 12 eingegrenzt, die mit einem Unterteil der Buchse 10 in Verbindung steht.

Figur 2 zeigt das Sicherungselement 14 der Befestigungsanordnung 1. Es ist ringförmig ausgestaltet und weist drei Sollbruchstellen 15 auf, die jeweils um 120° zueinander versetzt angeordnet sind. Dabei weisen die Sollbruchstellen 15 eine festgelegte Bruchfestigkeit auf, so dass sie aufgrund einer vorgegebenen Kraft oder bei Überschreitung der vorgegebenen Kraft brechen. Wirkt auf das über die Halteeinrichtung 2 mit der Befestigungsanordnung 1 verbundene Scheibenwischsystem eine Kraft, so wird diese Kraft auf das Sicherungselement 14 übertragen. Übersteigt die auf das Scheibenwischsystem wirkende Kraft einen vorgegebenen Wert, so bewirkt die Kraft, die über mindestens eines der Befestigungselemente auf das Sicherungselement 14 übertragen wird, einen Bruch mindestens einer der Sollbruchstellen 15.

Figur 3 zeigt den Zustand der Befestigungsanordnung nach Bruch des Sicherungselements 14 bzw. mindestens einer der Sollbruchstellen 15.

Bei einem Einschlag auf das Scheibenwischersystem senkrecht zu der Karosserie 4 in Richtung des Pfeils 40, vorausgesetzt ein absoluter Betrag der mit dem Einschlag auf das Scheibenwischsystem wirkenden Kraft übersteigt einen vorgegebenen Wert, wird das Brechen mindestens einer der Sollbruchstellen 15 bewirkt. Die Richtung der hierzu notwendigen Kraft bei dem Einschlag auf das Scheibenwischsystem muss nicht zwangsläufig senkrecht zu der Karosserie 4 ausgerichtet sein.

Da das Sicherungselement 14 mit seiner Innenfläche 24 mit der korrespondierend ausgebildeten Außenfläche 22 der Mutter 12 zusammenwirkt, wird bei einer hinreichend großen wirkenden Kraft eine resultierende, radial orientierte Kraft in Richtung der Pfeile 41 auf das Sicherungselement 14 Übertragen.

Figur 4 zeigt ein Ergebnis eines derartigen Einschlags bzw. einer derartigen Beaufschlagung des Scheibenwischsystems mit hinreichend großer Kraft. Nach Bruch des Sicherungselements 14 an den Sollbruchstellen 15 ist dieses in drei Fragmente 34 zerteilt, wobei die Trennungen an Trennstellen 25 verfolgten. Dadurch lösen sich die Fragmente 34 von einer ursprünglichen Anlage an der Mutter 12. Nunmehr wird die Festlegung der Trageeinrichtung 2 über die Tülle 8, die gemäß der Figur 1 mittels des Sicherungselements 14 bereitgestellt wurde, aufgebrochen. Somit löst sich die Tülle 8 mit der Trageeinrichtung 2 von der Schraube 6 sowie der Buchse 10, über die eine Befestigung an der Karosserie 4 ermöglicht wurde. Infolgedessen wird eine feste Anordnung des Scheibenwischsystems an der Karosserie 4 über die Befestigungsanordnung 1 gemäß Figur 1 ebenfalls gelöst. Auf diese Weise wird eine starre Anordnung bzw. Befestigung des Scheibenwischsystems relativ zu bzw. an der Karosserie 4 aufgehoben.

Die erfindungsgemäße Wirkung der Befestigungsanordnung 1 kann bei einem Unfall des Fahrzeugs, an dem die Scheibenwischanlage an der Karosserie 4 über die Befestigungsanordnung 1 befestigt ist, von Vorteil sein. Kommt es bei dem Unfall zu einer Kollision zwischen dem Fahrzeug und einer Person, wobei die Person mit dem Scheibenwischsystem unter erheblicher Krafteinwirkung auf das Scheibenwischsystem kollidiert, so wird das Scheibenwischsystem gelöst. Aufgrund einer derartig erfindungsgemäß bereitstellbaren Nachgiebigkeit des Scheibenwischsystems kann ein Verletzungsrisiko der Person erheblich reduziert werden.

## Patentansprüche

1. Befestigungsanordnung (1) mit einer Anzahl zusammenwirkender Befestigungselemente (2, 6, 8, 10, 12, 14), um eine Befestigung eines Funktionselements an einer Einrichtung (4) zu gewährleisten, wobei die Befestigungsanordnung (1) so ausgebildet ist, dass eine auf das Funktionselement wirkende Kraft an ein als Sicherungselement (14) ausgebildetes Befestigungselement übertragbar ist und ein Überschreiten der Kraft über einen vorgegebenen Wert ein Brechen des Sicherungselements (14) und ein Lösen der Befestigung bewirkt,
**dadurch gekennzeichnet,**
**dass** eines der Befestigungselemente als Mutter (12) ausgebildet ist, dass die Mutter (12) an einem anderen, als Schraube (6) ausgebildeten Befestigungselement befestigt ist, dass die Mutter (12) mit einer Außenfläche (22) mit einem als Sicherungselement (14) ausgebildeten Befestigungselement zusammenwirkt, wobei die Mutter (12) koaxial zum Sicherungselement (14) angeordnet ist und die Außenfläche (22) der Mutter (12) mit einer der Außenfläche (22) angepassten Innenfläche (24) des Sicherungselements (14) zusammenwirkt, dass die Mutter (12) und das Sicherungselement (14) konisch ausgebildet sind und, dass eine als Befestigungselement ausgebildete Buchse (10) vorgesehen ist, die zwischen der als Fahrzeugteil (4) ausgebildeten Einrichtung und der Mutter (12) koaxial zu der Schraube (6) angeordnet ist.

2. Befestigungsanordnung nach Anspruch 1, bei der die auf das Funktionselement wirkende Kraft über mindestens eines der Befestigungselemente (2, 6, 8, 10, 12, 14) auf das Sicherungselement (14) übertragbar ist.

3. Befestigungsanordnung nach einem der Ansprüche 1 bis 2, bei der das Sicherungselement (14) mindestens eine Sollbruchstelle (15) aufweist.

4. Befestigungsanordnung nach einem der Ansprüche 1 bis 3, die über der Schraube (6) an einer als Fahrzeugteil (4) ausgebildeten Einrichtung verankert ist.

5. Befestigungsanordnung nach einem der Ansprüche 1 bis 4, die über eine Halteeinrichtung (2) mit dem Funktionselement verbunden ist.

6. Befestigungsanordnung nach Anspruch 1, die ein koaxial zu der Buchse (10) angeordnetes, über das Sicherungselement (14) fixiertes und als elastische Tülle (8) ausgebildetes Befestigungselement (8) zur Aufnahme der Halteeinrichtung (2) aufweist.

7. Befestigungsanordnung nach einem der Ansprüche 1 bis 6, bei der mindestens zwei Befestigungselemente (2, 6, 8, 10, 12, 14) koaxial zu einer Achse (3) angeordnet sind, wobei die Richtung der auf das Funktionselement wirkenden Kraft auf das Sicherungselement (14) senkrecht zu der Achse (3) übertragbar ist

8. Befestigungsanordnung nach einem der Ansprüche 1 bis 7, bei der die auf das Funktionselement wirkenden Kraft auf das Sicherungselement (14) in radialer Richtung übertragbar ist.

9. Befestigungsanordnung nach einem der Ansprüche 1 bis 8, die an einem als Karosserie (4) ausgebildeten Fahrzeugteil verankert ist.

10. Befestigungsanordnung nach einem der Ansprüche 1 bis 9, zur Befestigung eines als Scheibenwischsystem ausgebildeten Funktionselements an einer Karosserie (4) eines Fahrzeugs.

11. Scheibenwischsystem mit einem Wischblatt, das relativ zu einer Scheibe eines Fahrzeugs drehbar ist, das mit einer Befestigungsanordnung (1) nach einem der Ansprüche 1 bis 13 an einer Karosserie (4) des Fahrzeugs befestigt ist.

## Claims

1. A fastening system (1) comprising a plurality of fastening elements (2, 6, 8, 10, 12, 14) for ensuring fastening of a functional element to a device (4), wherein the fastening system (1) is formed in such a manner that a force acting upon the functional element can be transmitted to a fastening element that is formed as a securing element (14), and exceeding the force beyond a predetermined value results in breaking of the securing element (14) and undoing of the fastening,
**characterized in**
**that** one of the fastening elements is formed as a nut (12), that the nut (12) is fastened to another fastening element that is formed as a screw (6), that the nut (12) interacts via an outer surface (22) with a fastening element that is formed as a securing element (14), wherein the nut (12) is arranged coaxial to the securing element (14) and the outer surface (22) of the nut (12) interacts with an inner surface (24) of the securing element (14), which inner surface is adapted to the outer surface (22), that the nut (12) and the securing element (14) are formed conically, and that a bushing (10) is provided that is formed as a fastening element and that is arranged between the device formed as a vehicle part (4) and the nut (12) to be coaxial to the screw (6).

2. The fastening system according to claim 1, wherein the force acting upon the functional element can be transmitted to the securing element (14) via at least one of the fastening elements (2, 6, 8, 10, 12, 14).

3. The fastening system according to any one of the claims 1 to 2, wherein the securing element (14) has at least one predetermined breaking point (15).

4. The fastening system according to any one of the claims 1 to 3, which is anchored via the screw (6) to a device formed as a vehicle part (4).

5. The fastening system according to any one of the claims 1 to 4, which is connected to the functional element via a holding device (2).

6. The fastening system according to claim 1, which comprises a fastening element (8) for receiving the holding device (2), said fastening element being arranged coaxial to the bushing (10), fixed via the securing element (14) and formed as an elastic sleeve (8).

7. The fastening system according to any one of the claims 1 to 6, wherein at least two fastening elements (2, 6, 8, 10, 12, 14) are arranged coaxial to an axis (3), wherein the direction of the force acting upon the securing element (14) can be transmitted perpendicular to the axis (3).

8. The fastening system according to any one of the claims 1 to 7, wherein the force acting upon the securing element (14) can be transmitted in the radial direction.

9. The fastening system according to any one of the claims 1 to 8, which is anchored to a vehicle part formed as a vehicle body (4).

10. The fastening system according to any one of the claims 1 to 9, for fastening a functional element formed as a windscreen wiper system to a vehicle body (4) of a vehicle.

11. A windscreen wiper system having a wiper blade that is rotatable relative to a windscreen of a vehicle, and that is fastened with a fastening system (1) according to any one of the claims 1 to 13 to a vehicle body (4) of the vehicle.

## Revendications

1. Dispositif de fixation (1) comprenant un certain nombre d'éléments de fixation (2, 6, 8, 10, 12, 14) coopérant les uns avec les autres, afin d'assurer une fixation d'un élément fonctionnel à un dispositif (4), le dispositif de fixation (1) étant réalisé de telle sorte qu'une force agissant sur l'élément fonctionnel puisse être transmise à un élément de fixation réalisé sous forme d'élément de sécurité (14) et qu'un dépassement de la force d'une valeur prédéfinie provoque une rupture de l'élément de sécurité (14) et un détachement de la fixation,
**caractérisé en ce que**
l'un des éléments de fixation est réalisé sous forme d'écrou (12), **en ce que** l'écrou (12) est fixé à un autre élément de fixation réalisé sous forme de vis (6), **en ce que** l'écrou (12) coopère, par une surface extérieure (22), avec un élément de fixation réalisé sous forme d'élément de sécurité (14), l'écrou (12) étant disposé de manière coaxiale à l'élément de sécurité (14) et la surface extérieure (22) de l'écrou (12) coopérant avec une surface intérieure (24) de l'élément de sécurité (14) qui est adaptée à la surface extérieure (22), **en ce que** l'écrou (12) et l'élément de sécurité (14) sont réalisés de manière conique, et **en ce qu'**il est prévu une douille (10) réalisée sous forme d'élément de fixation, laquelle douille est disposée, de manière coaxiale à la vis (6), entre le dispositif réalisé sous forme de partie de véhicule (4) et l'écrou (12).

2. Dispositif de fixation selon la revendication 1, dans lequel la force agissant sur l'élément fonctionnel peut être transmise à l'élément de sécurité (14) par le biais d'au moins l'un des éléments de fixation (2, 6, 8, 10, 12, 14).

3. Dispositif de fixation selon la revendication 1 ou 2, dans lequel l'élément de sécurité (14) comprend au moins un point destiné à la rupture (15).

4. Dispositif de fixation selon l'une quelconque des revendications 1 à 3, lequel est ancré, au moyen de la vis (6), sur un dispositif réalisé sous forme de partie de véhicule (4).

5. Dispositif de fixation selon l'une quelconque des revendications 1 à 4, lequel est relié à l'élément fonctionnel au moyen d'un dispositif de retenue (2).

6. Dispositif de fixation selon la revendication 1, lequel comprend un élément de fixation (8) disposé de manière coaxiale à la douille (10), fixé par le biais de l'élément de sécurité (14) et réalisé sous forme de gaine élastique (8), en vue de la réception du dispositif de retenue (2).

7. Dispositif de fixation selon l'une quelconque des revendications 1 à 6, dans lequel au moins deux éléments de fixation (2, 6, 8, 10, 12, 14) sont disposés de manière coaxiale à un axe (3), la direction de la force agissant sur l'élément fonctionnel pouvant être transmise à l'élément de sécurité (14) perpendiculairement à l'axe (3).

8. Dispositif de fixation selon l'une quelconque des revendications 1 à 7, dans lequel la force agissant sur l'élément fonctionnel peut être transmise à l'élément de sécurité (14) dans la direction radiale.

9. Dispositif de fixation selon l'une quelconque des revendications 1 à 8, lequel est ancré sur une partie de véhicule réalisée sous forme de carrosserie (4).

10. Dispositif de fixation selon l'une quelconque des revendications 1 à 9, pour la fixation d'un élément fonctionnel, réalisé sous forme de système d'essuie-glace, à une carrosserie (4) d'un véhicule.

11. Système d'essuie-glace comprenant un balai d'essuie-glace qui est rotatif par rapport à une vitre d'un véhicule, lequel système d'essuie-glace est fixé à une carrosserie (4) du véhicule à l'aide d'un dispositif de fixation (1) selon l'une quelconque des revendications 1 à 13.
